# EUROPEAN PATENT APPLICATION

(11) **EP 4 538 016 A1**
(43) Date of publication of application: **16.04.2025**
(21) Application number: 24206075.4
(22) Date of filing: 11.10.2024
(51) Int. Cl.: B29C 45/17, G05B 19/409, B29C 45/76

(54) **INJECTION MOLDING MACHINE**

(30) Priority: 12.10.2023 JP 2023176368
(71) Applicant: The Japan Steel Works, Ltd., Tokyo 141-0032 (JP)
(72) Inventor: HANAYAMA, Kazuhiro, Tokyo, 141-0032 (JP)
(74) Representative: Simmons & Simmons LLP (Munich)

(57) **Abstract**

An injection molding machine changes a display position of a first image (11) based on a change instruction that is input by a user.

## Description

### CROSS REFERENCE TO RELATED APPLICATIONS

This nonprovisional application is based on Japanese Patent Application No. 2023-176368 filed on October 12, 2023 with the Japan Patent Office, the entire contents of which are hereby incorporated by reference.

### BACKGROUND OF THE INVENTION

### Field of the Invention

The present disclosure relates to an injection molding machine.

### Description of the Background Art

For example, Japanese Patent Laying-Open No. 2022-146610 discloses an injection molding machine including a display section. This display section displays an image indicating set values for injection molding conditions of the injection molding machine.

### SUMMARY OF THE INVENTION

In conventional injection molding machines, however, a display position of the image cannot be changed by a user. Therefore, it may not be possible to improve the convenience of the user in regard to the display position of the image.

The present invention has been made to solve such a problem, and an object of the present invention is to provide an injection molding machine that improves the convenience of a user in regard to a display position of an image.

An injection molding machine according to one embodiment changes a display position of a first image based on a change instruction that is input by a user.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a construction of an injection molding machine 100.
Fig. 2 is a diagram showing an exemplary setting screen.
Fig. 3 is a diagram showing an exemplary method of changing a display position of a first image.
Fig. 4 is a diagram showing an exemplary method of deleting the first image.
Fig. 5 is a diagram showing an exemplary method of adding a first image.
Fig. 6 is a diagram showing an exemplary method of changing a display position of a display item.
Fig. 7 is a diagram showing an exemplary method of deleting the display item.
Fig. 8 is a diagram showing an exemplary method of adding a display item.
Fig. 9 is a diagram showing an exemplary first table.
Fig. 10 is a diagram showing an exemplary second table.
Fig. 11 is a diagram showing another exemplary method of deleting the first image.
Fig. 12 is a diagram showing another exemplary method of deleting the display item.

### DESCRIPTION OF THE PREFERRED EMBODIMENTS

Embodiments of the present invention will be hereinafter described in detail with reference to the drawings, in which the same or corresponding portions are denoted by the same reference characters and description thereof will not be repeated.

### <First Embodiment>

### [Construction of Injection Molding Machine]

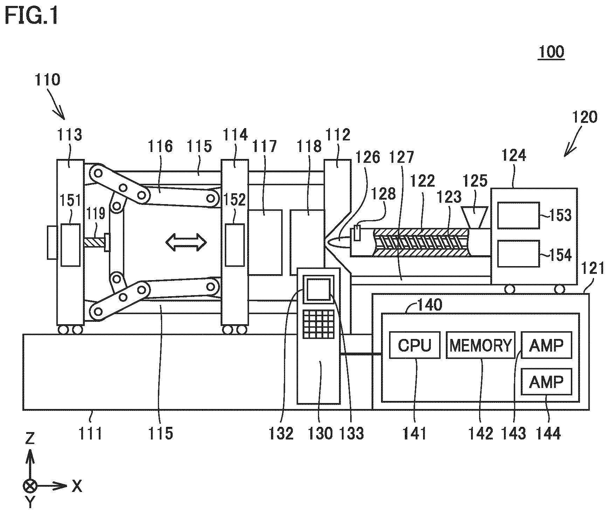

Fig. 1 is a diagram for illustrating a construction of an injection molding machine 100 according to a first embodiment. For the sake of convenience of description, a floor surface where injection molding machine 100 is arranged in Fig. 1 is defined as an XY plane and a direction perpendicular to the floor surface is defined as a Z-axis direction. A positive direction along a Z axis may be referred to as an upper surface side or above and a negative direction thereof may be referred to as a lower surface side or below. Though injection molding machine 100 is shown as a lateral injection molding machine, it is not limited to the lateral type but may be a vertical injection molding machine.

Injection molding machine 100 includes a mold clamping apparatus 110 that clamps a mold, an injection apparatus 120 that melts and injects an injection material, a control panel 130, and a controller 140. In Fig. 1, mold clamping apparatus 110 is arranged on a side of the negative direction along an X axis with respect to injection apparatus 120.

Mold clamping apparatus 110 includes a bed 111, a fixed plate 112, a mold clamping housing 113, a moving plate 114, a tie bar 115, a mold clamping mechanism 116, molds 117 and 118, and a ball screw 119. Bed 111 is arranged on the floor surface, and such apparatuses as fixed plate 112, mold clamping housing 113, and moving plate 114 are mounted on an upper surface thereof.

Fixed plate 112 is fixed on bed 111 at an end on a side closer to injection apparatus 120 (that is, the positive direction along the X axis). Mold clamping housing 113 is arranged on bed 111 at an end in the negative direction along the X axis. Fixed plate 112 and mold clamping housing 113 are coupled to each other by tie bar 115 including a plurality of bars. Mold clamping housing 113 is movable over bed 111 in an X-axis direction.

Moving plate 114 is arranged on bed 111 between fixed plate 112 and mold clamping housing 113. Moving plate 114 is constructed as being movable in the X-axis direction. Mold clamping housing 113 and moving plate 114 are coupled to each other by mold clamping mechanism 116. Mold clamping mechanism 116 includes a toggle mechanism. Ball screw 119 is coupled to the toggle mechanism. A servo motor 151 arranged in mold clamping housing 113 is driven to rotate ball screw 119, so that moving plate 114 can be moved relatively to mold clamping housing 113 in the X-axis direction. A direct acting type cylinder which is driven by a hydraulic pressure may be employed for mold clamping mechanism 116.

Molds 117 and 118 are arranged in moving plate 114 and fixed plate 112, respectively. Mold 117 and mold 118 are arranged as being opposed to each other between moving plate 114 and fixed plate 112. By moving mold 117 in the X-axis direction with the use of mold clamping mechanism 116, mold 117 and mold 118 can be brought in intimate contact with each other or moved away from each other. In the description below, a process of transition from a state in which molds 117 and 118 are distant from each other to a state in which the molds are in intimate contact with each other is referred to as "mold clamping." A process of transition from the state in which molds 117 and 118 are in intimate contact with each other to the state in which the molds are distant from each other is referred to as "mold opening."

While mold 117 and mold 118 are in intimate contact with each other in the mold clamping process, the molds are filled with a molten material (resin), and the molds are cooled to solidify the material. Then, a product (molded article) in a desired shape can be molded. After the product is molded, with mold 117 being distant from mold 118 in the mold opening process, an ejection mechanism (not shown) arranged in moving plate 114 can be activated to take the molded article out of mold 117. The ejection mechanism is driven by a servo motor 152 arranged in moving plate 114. A process of taking out a product with the use of the ejection mechanism is referred to as an "ejection" process.

Injection apparatus 120 includes a base 121, a heating cylinder 122, an actuation apparatus 124, a hopper 125, a nozzle touch apparatus 127, and a temperature sensor 128. Base 121 is arranged on the floor surface of bed 111 on the side of the positive direction along the X axis, and actuation apparatus 124 is mounted on an upper surface thereof. Servo motors 153 and 154 are arranged in actuation apparatus 124.

Heating cylinder 122 that extends in the X-axis direction is arranged in actuation apparatus 124. Heating cylinder 122 includes a heater (not shown) that heats the inside, a screw 123, and an injection nozzle 126. Screw 123 is driven by servo motor 153 in actuation apparatus 124 and it is constructed as being rotatable around the X-axis direction as a rotation axis. Screw 123 is driven by servo motor 154 and it is constructed to be movable in the X-axis direction. Injection nozzle 126 is arranged at an end of heating cylinder 122 on a side of mold clamping apparatus 110 (that is, the end in the negative direction along the X axis). Heating cylinder 122 heats and melts a resin material like beads injected from hopper 125, and the material is kneaded by screw 123 to produce a molten material. A process of melting the resin material as such is referred to as a "plasticization" process. This plasticization process also includes a process of weighing the molten material to be used in one shot.

Nozzle touch apparatus 127 is constructed by a mechanism using a hydraulic cylinder or a mechanism using a ball screw, for example, and couple's actuation apparatus 124 and fixed plate 112 of mold clamping apparatus 110 to each other. When nozzle touch apparatus 127 is constructed by the mechanism using a ball screw, nozzle touch apparatus 127 is driven by actuation apparatus 124 and moves actuation apparatus 124 and heating cylinder 122 in the X-axis direction. Injection nozzle 126 is brought in contact with a sprue bush of mold 118 in mold clamping apparatus 110 by nozzle touch apparatus 127, and the molten material is injected from injection nozzle 126 to fill a cavity in molds 117 and 118 with the molten material. Servo motor 154 applies a pressure to the molten material by moving screw 123 in heating cylinder 122 in the negative direction along the X axis to inject the molten material into molds 117 and 118 and to hold a constant pressure of the injected molten material.

The construction of a nozzle touch mechanism is not limited to the construction of moving the entire injection apparatus by the ball screw arranged between fixed plate 112 and actuation apparatus 124 as described above, but may be another construction. For example, the construction may be such that an apparatus frame and a fixation member on a rear portion of the heating cylinder are coupled to each other with the use of a ball screw, and the heating cylinder itself is moved in the direction of the molds. Alternatively, the construction may be such that a slide base with the injection apparatus mounted thereon and the apparatus frame are coupled to each other with the use of a ball screw, and the injection apparatus is moved with the slide base to bring the injection nozzle in contact with the molds.

The process of injecting the molten material into molds 117 and 118 is referred to as an "injection" process. A process of holding the molten material filled in molds 117 and 118 at a constant pressure and cooling the molten material after the injection process is referred to as a "pressure holding" process.

Temperature sensor 128 is arranged in the vicinity of injection nozzle 126 in heating cylinder 122. Temperature sensor 128 detects a temperature of the molten material in heating cylinder 122 and outputs the temperature to controller 140. Controller 140 controls the heater based on a detection value from temperature sensor 128 and adjusts the temperature of the molten material to a desired temperature.

After the pressure holding process is completed, the mold opening process and the ejection process are performed to take out the molded product.

Injection molding machine 100 can successively form products by cyclically and repeatedly performing the mold clamping process, the injection process, the pressure holding process, the plasticization process, the mold opening process, and the ejection process. In the present embodiment, the mold clamping process, the injection process, the pressure holding process, the plasticization process, the mold opening process, and the ejection process correspond to the "plurality of processes" in the present disclosure. In other words, injection molding machine 100 produces a molded article by performing the plurality of processes.

Controller 140 is contained in base 121. Controller 140 includes a CPU 141, a memory 142, and servo amplifiers for driving servo motors 151 to 154. In the example of Fig. 1, a servo amplifier 143 for driving servo motor 151 and a servo amplifier 144 for driving servo motor 153 are shown as the servo amplifiers. Controller 140 obtains detection values from various sensors arranged in injection molding machine 100 and controls injection molding machine 100 in an integrated manner.

Control panel 130 is an apparatus that allows a user to operate injection molding machine 100, and includes a display 132 having a display area 133 that displays various images, and an input apparatus such as a keyboard. Control panel 130 is connected to controller 140, and can obtain a state of injection molding machine 100 and have the state shown or can output a user operation signal from the input apparatus to controller 140.

Display 132 in the present embodiment is a touch panel, which can display an image and accept an input (instruction) from the user. Controller 140 obtains the input (instruction) from the user. Control panel 130 may be attached to bed 111 or base 121 of injection molding machine 100 or arranged at a position independent of injection molding machine 100.

### [Display on Display 132]

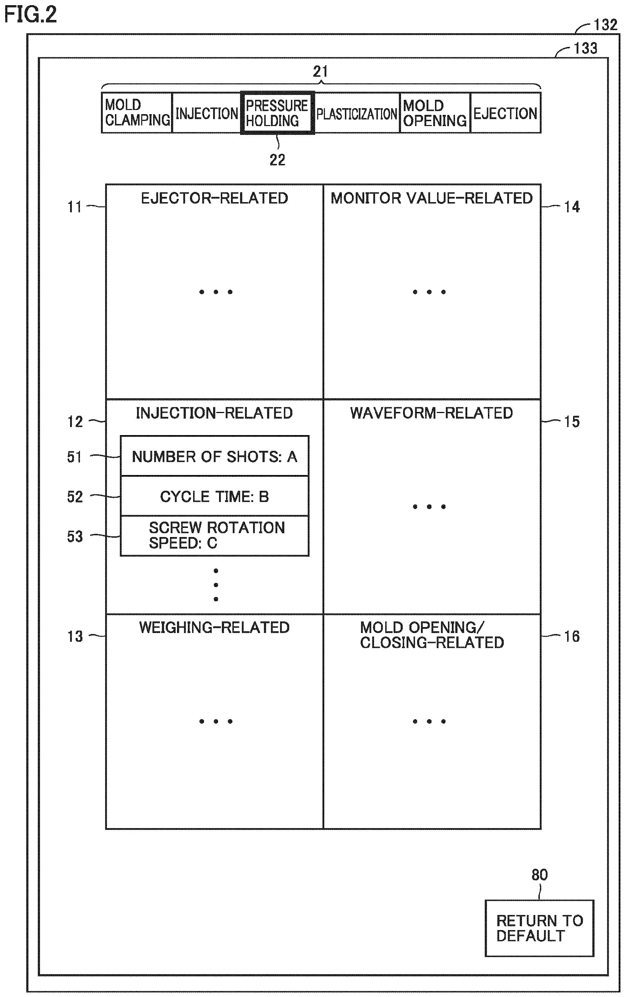

Fig. 2 is a diagram showing an exemplary setting screen displayed on display 132. Though Fig. 2 is mainly referred to in the description of the exemplary display on display 132 below, Fig. 1 is also referred to as appropriate.

Display 132 displays at least one first image, a second image 21, and a default button 80. The at least one first image is an image related to injection molding machine 100, more typically an image related to operation of injection molding machine 100. Specifically, the first image performs at least one of "displaying an operation image" and "accepting a command from a user." The operation image is an image related to operation of injection molding machine 100, for example, an image of at least one of a set value, a monitor value, a graph and the like. When the first image accepts a command from the user, injection molding machine 100 performs processing based on the command from the user. The command is, for example, a set value. In other words, the user can input the set value to the first image. Injection molding machine 100 performs processing based on the input set value. The first image also displays the set value input by the user. Controller 140 displays the at least one first image related to injection molding machine 100 on display 132.

In the example of Fig. 2, the at least one first image is a first image 11, a first image 12, a first image 13, a first image 14, a first image 15, and a first image 16. These six first images are also referred to as "first images 11 to 16."

First image 11 is an image indicating a set value and the like of an ejector (the ejection process). First image 12 is an image indicating a set value and the like of the injection process. First image 13 is an image indicating a set value and the like of the weighing process. First image 14 is an image indicating a monitor value and the like of injection molding machine 100. First image 15 is an image indicating a waveform of a parameter (such as a detection temperature) of injection molding machine 100. First image 16 is an image indicating a set value and the like for mold opening/closing (the mold clamping process and the mold opening process).

Fig. 2 shows an example in which display items of first image 12 (display items corresponding to first image 12) are displayed in an image display area displayed by first image 12. The image display area displayed by first image 12 is, for example, a display area occupied by first image 12 in display area 133. In the example of Fig. 2, a display item 51, a display item 52, and a display item 53 are shown as the display items of first image 12. Display item 51 is an image indicating a number of shots A of injection molding machine 100. Display item 52 is an image indicating a cycle time B of injection molding machine 100. Display item 53 is an image indicating a screw rotation speed C of screw 123.

Display items of the first images other than first image 12 are indicated by three-dot lines in the example of Fig. 2. Display items other than display item 51, display item 52, and display item 53 of first image 12 are also indicated by a three-dot line in the example of Fig. 2.

As will be described later herein, controller 140 changes a display position of each of first image 11, first image 12, first image 13, first image 14, first image 15, and first image 16 based on a change instruction that is input by the user.

Second image 21 is an image that is different from the first image and that is related to injection molding machine 100. A display position of second image 21 in display area 133 corresponds to the "specific position" in the present disclosure. As described above, injection molding machine 100 produces a molded article by performing the plurality of processes. Second image 21 is an image that allows the user to identify the plurality of processes. In the example of Fig. 2, second image 21 is an image indicating the names of the plurality of processes. Further, second image 21 in the present embodiment includes a frame image 22. Frame image 22 is an image indicating a process of the plurality of processes that is currently being performed by injection molding machine 100. In the example of Fig. 2, frame image 22 is displayed in association with the pressure holding process. Therefore, the frame image in Fig. 2 indicates that the process being performed by injection molding machine 100 is the pressure holding process. Controller 140 does not change the display position of second image 21 from the specific position regardless of input of the change instruction from the user (even if the change instruction is input by the user).

In the present embodiment, the display positions of the six first images shown in Fig. 2 are default display positions (initial positions). As will be described later herein, the user can change the display position of each of the six first images. When default button 80 is operated by the user after the display positions of the six first images are changed, the display positions of the six first images are set to the default display positions.

### [Change of Display Position of First Image]

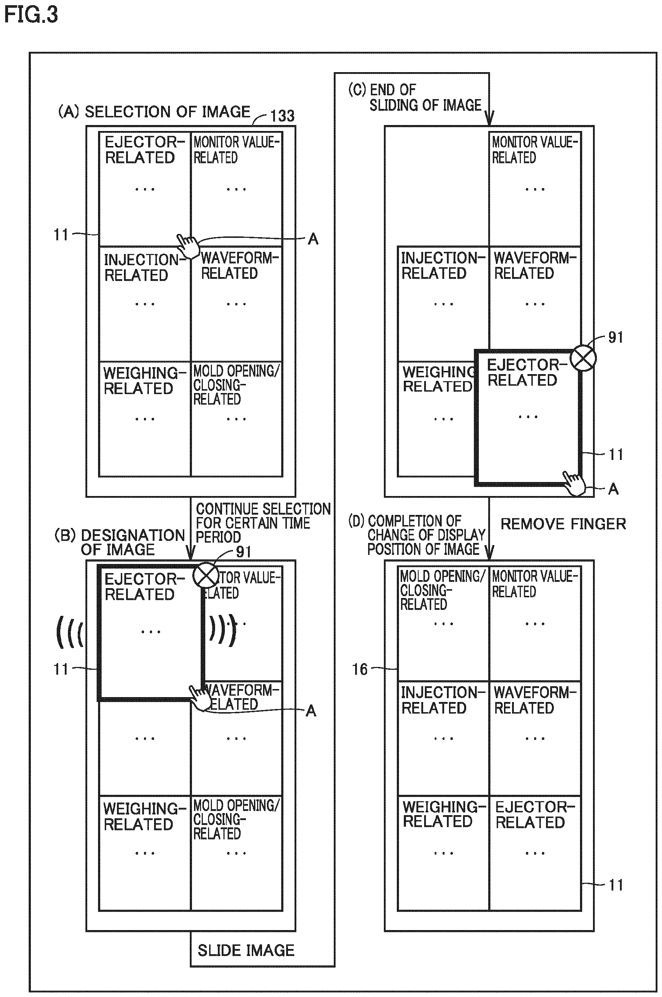

Fig. 3 is a diagram showing an exemplary method of changing the display position of the first image. Though Fig. 3 is mainly referred to in the description of the exemplary method of changing the display position of the first image below, Figs. 1 and 2 are also referred to as appropriate.

Fig. 3 describes an example of changing the display position of first image 11 (the ejector-related image) displayed at the top left of display area 133 to the bottom right position. Fig. 3(A) is a diagram in which the user is selecting first image 11 for which the user wishes to change the display position. In the example of Fig. 3, the selection of first image 11 is a touch of first image 11 with the user's finger A. The selection of the first image is not limited to the use of the user's finger A, but may be done by other means (for example, a pointer of a mouse).

When the selection of first image 11 (the touch of first image 11 with the user's finger A) is continued for a certain time period, controller 140 accepts a designation of first image 11. The certain time period is a predetermined value and is set, for example, to three seconds. On the other hand, when the selection of first image 11 is continued for less than the certain time period, in other words, when finger A is removed from first image 11 before the touch of first image 11 with the user's finger A has been continued for the certain time period, controller 140 does not accept a designation of first image 11.

Fig. 3(B) illustrates that controller 140 has accepted the designation of first image 11. When controller 140 accepts the designation of first image 11, controller 140 displays first image 11 in a specific display mode different from a display mode when first image 11 is not designated. By displaying designated first image 11 in the specific display mode in this manner, controller 140 can allow the user to recognize that the first image has been designated. The specific display mode may be another display mode, for example, a mode in which the designated first image is displayed in a flashing state.

The specific display mode in the example of Fig. 3(B) is a display mode in which first image 11 vibrates. By displaying designated first image 11 in a vibrating state in this manner, controller 140 can allow the user to recognize that the first image has been designated.

When first image 11 is designated, a delete button 91 is displayed in association with first image 11. Delete button 91 will be described later herein.

When first image 11 is displayed in a vibrating state, the user performs a so-called drag-and-drop operation of sliding first image 11 to a position desired by the user. The desired position corresponds to the "designated display position" in the present disclosure. Designating first image 11, moving first image 11, and removing finger A from first image 11 corresponds to the "change instruction from a user" in the present disclosure.

Fig. 3(C) illustrates that the sliding of first image 11 has ended. When the user removes finger A in the state of Fig. 3(C), the change of the display position of first image 11 is completed. Fig. 3(D) illustrates that the change of the display position of first image 11 has been completed. In the example of Fig. 3(D), first image 16 that was displayed at the designated display position is displayed at the display position of first image 11 before the change. In other words, in the example of Fig. 3(D), the display position of first image 11 and the display position of first image 16 have been switched.

Next, advantageous effects of injection molding machine 100 in the present embodiment are described. The user may wish to change the display position of the first image related to the injection molding machine depending on, for example, individuality of the user (for example, idea of molding, habit, and dominant hand). In conventional injection molding machines, however, the user cannot change the display position of the first image by the user's operation. It is thus necessary for the user to request a manufacturer of the injection molding machine to change the display position of the first image, which may result in increased cost.

In contrast, injection molding machine 100 in the present embodiment can change the display position of the first image based on the change instruction that is input by the user. Therefore, injection molding machine 100 can improve the convenience of the user in regard to the display position of the first image. With this, injection molding machine 100 can reduce the cost.

The user can designate first image 11 and designate the display position of first image 11 in display area 133 of display 132 (see Fig. 3). Therefore, the user can intuitively change the display position of the first image.

Controller 140 accepts the designation of first image 11 in response to continuation of the selection of first image 11 by the user for the certain time period, as shown in Figs. 3(A) and 3(B). Therefore, injection molding machine 100 can prevent a change of the display position of the first image due to an erroneous operation by the user.

Display 132 may display an important image, for example. In such a case, if a display position of the important image is changed by an instruction not intended by the user, the user may lose sight of the important image, resulting in reduced convenience of the user. According to such a configuration, therefore, controller 140 does not change the display position of the second image (important image) from the specific position regardless of input of the change instruction from the user. Therefore, the reduced convenience of the user can be prevented.

Of the plurality of processes performed by injection molding machine 100, a process being performed by the injection molding machine is an important image for the user in terms of quality assurance of a molded article and the like. From this viewpoint, in the present embodiment, display 132 displays, as second image 21, an image indicating the name of the process being performed by injection molding machine 100, as shown in Fig. 2. If the display position of second image 21 is changeable, the display position of second image 21 may be changed due to an erroneous operation by the user, resulting in the user losing sight of second image 21. If the user loses sight of second image 21, the molded article may be adversely affected by erroneous operation and action by the user, resulting in reduced quality of the molded article. In the present embodiment, therefore, controller 140 can prevent, regardless of input of the change instruction from the user, a change of the display position of second image 21 indicating the name of the process being performed by the injection molding machine. Therefore, injection molding machine 100 can prevent the user from losing sight of second image 21 and assure the quality of the molded article.

When default button 80 (see Fig. 2) is operated with the changed display position of first image 11 (for example, in the state of Fig. 3(D)), controller 140 changes the display position of first image 11 to the default display position (the initial position shown in Figs. 2 and 3(A)) (returns the display position to the default position). Thus, controller 140 can return the changed display position of the first image to the initial position, thereby improving the convenience of the user. The operation of default button 80 corresponds to the "return instruction" in the present disclosure.

### [Deletion of First Image]

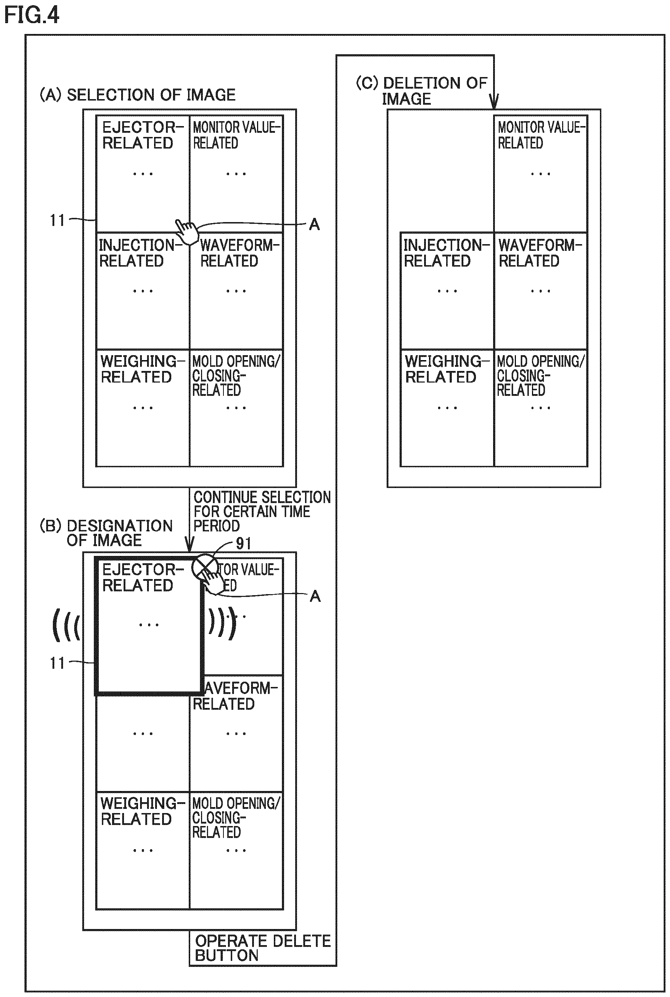

Controller 140 in the present embodiment can delete the first image displayed on display 132. Fig. 4 is a diagram showing an exemplary method of deleting the first image. Fig. 4(A) is the same diagram as Fig. 3(A). When controller 140 accepts a designation of first image 11 as shown in Fig. 4(A), delete button 91 is displayed in association with first image 11.

Fig. 4(B) illustrates that the user is operating delete button 91. Fig. 4(C) illustrates that first image 11 corresponding to operated delete button 91 has been deleted. When the user operates delete button 91 (when the user touches delete button 91) as shown in Fig. 4(B), controller 140 deletes first image 11 corresponding to delete button 91 (stops displaying first image 11) as shown in Fig. 4(C). The operation of delete button 91 corresponds to the "delete instruction" in the present disclosure.

According to such a configuration, controller 140 deletes first image 11 based on the delete instruction that is input by the user. Therefore, controller 140 can allow the user to delete first image 11 determined to be unnecessary by the user, thereby improving the convenience of the user.

### [Addition of First Image]

Controller 140 in the present embodiment can import and additionally display a first image that was not displayed on display 132. When the user executes a prescribed image add instruction, controller 140 additionally displays a first image that was not displayed.

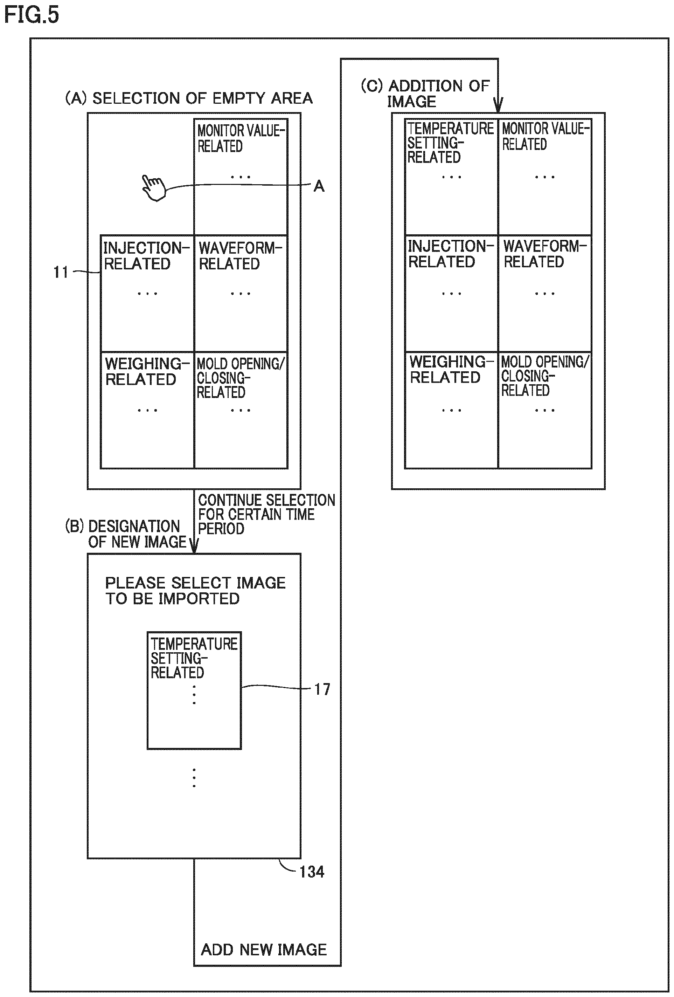

Fig. 5 is a diagram showing an exemplary method of adding a first image. Though Fig. 5 is mainly referred to in the description of the exemplary method of adding a first image below, Figs. 2 and 4 are also referred to as appropriate. Fig. 5(A) is a diagram in which the user is selecting an empty area. The empty area as used herein refers to an area not displaying any first image in the setting screen displaying the first images (see Fig. 2). An instruction that designates the empty area corresponds to the "third instruction" in the present disclosure. When the selection of the empty area (the touch of the empty area with the user's finger A) is continued for a certain time period, controller 140 displays an import screen 134.

Fig. 5(B) is a diagram showing exemplary import screen 134. In the example of Fig. 5(B), at least one new first image (a first image not displayed on display 132) is displayed. In the example of Fig. 5(B), an image indicating a temperature set value is displayed as a new first image 17. The user designates, from among the first images displayed on import screen 134 in Fig. 5, a first image that the user wishes to display on display 132. Import screen 134 in Fig. 5(B) corresponds to the "image list screen" in the present disclosure. An instruction that designates one of the at least one new first image displayed on import screen 134 in Fig. 5(B) corresponds to the "fourth instruction" in the present disclosure.

Fig. 5(C) illustrates that the new first image selected on import screen 134 has been displayed. As shown in Fig. 5(C), controller 140 displays the new first image selected on import screen 134 in Fig. 5(B) in the empty area in Fig. 5(A). The designation of the empty area (third instruction) and the designation of the new image (fourth instruction) are included in the "image add instruction" in the present disclosure.

Controller 140 may automatically determine a display area in which the new first image is to be displayed on the setting screen in Fig. 2, and display the new first image in the display area. Controller 140 displays the first image deleted by the user in Fig. 4 on import screen 134 in Fig. 5.

According to such a configuration, controller 140 displays the new first image on display 132 based on the add instruction that is input by the user. Therefore, the first image desired by the user can be displayed, so that the convenience of the user can be improved.

Controller 140 displays the new first image designated by the user in the empty area designated by the user. Therefore, the convenience of the user can be improved.

### [Change of Display Position of Display Item]

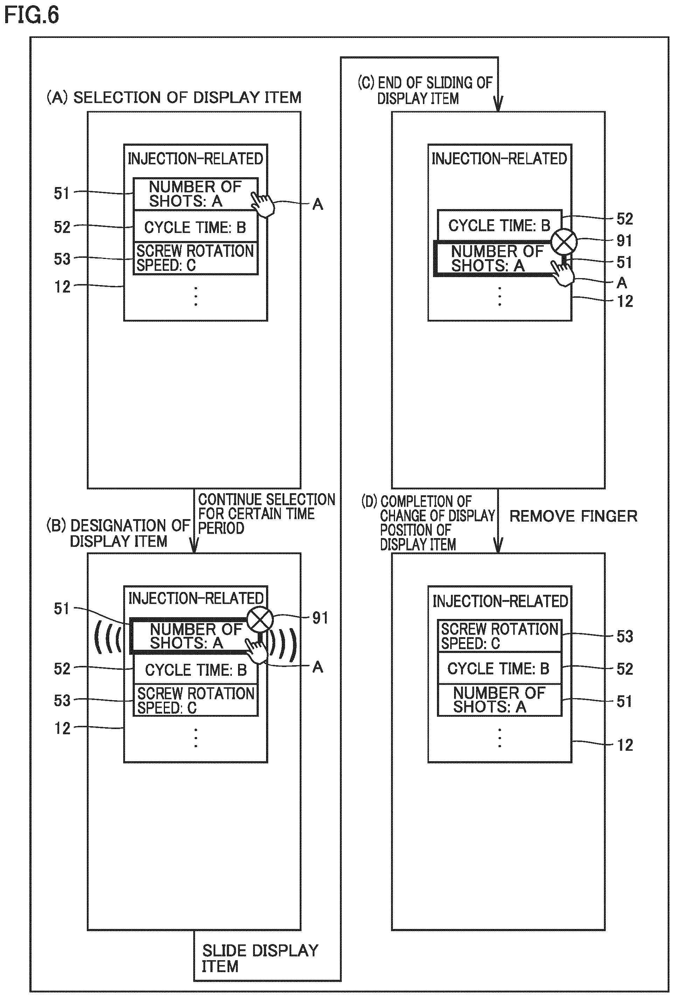

Fig. 6 is a diagram showing an exemplary method of changing the display position of the display item in the first image. Though Fig. 6 is mainly referred to in the description of the exemplary method of changing the display position of the display item below, Figs. 1 and 2 are also referred to as appropriate.

Fig. 6 describes an example of changing the display position of display item 51 (the image of the number of shots) displayed in the image display area of first image 12 from the top to the bottom. Fig. 6(A) is a diagram in which the user is selecting display item 51 for which the user wishes to change the display position. In the example of Fig. 6, the selection of display item 51 is a touch of display item 51 with the user's finger A.

When the selection of display item 51 (the touch of display item 51 with the user's finger A) is continued for a certain time period, controller 140 accepts a designation of display item 51. The certain time period is a predetermined value and is set, for example, to three seconds. On the other hand, when the selection of display item 51 is continued for less than the certain time period, in other words, when finger A is removed from display item 51 before the touch of display item 51 with the user's finger A has been continued for the certain time period, controller 140 does not accept a designation of display item 51.

Fig. 6(B) illustrates that controller 140 has accepted the designation of display item 51. When controller 140 accepts the designation of display item 51, controller 140 displays display item 51 in a specific display mode different from a display mode when display item 51 is not designated. By displaying designated display item 51 in the specific display mode in this manner, controller 140 can allow the user to recognize that the display item has been designated.

The specific display mode in the example of Fig. 6(B) is a display mode in which display item 51 vibrates. By displaying designated display item 51 in a vibrating state in this manner, controller 140 can allow the user to recognize that the display item has been designated.

When display item 51 is designated, delete button 91 is displayed in association with display item 51. Delete button 91 will be described later herein.

When display item 51 is displayed in a vibrating state, the user performs a so-called drag-and-drop operation of sliding display item 51 to a position desired by the user. The desired position corresponds to the "designated display position" in the present disclosure. Designating display item 51, moving display item 51, and removing finger A from display item 51 corresponds to the "change instruction from a user" in the present disclosure.

Fig. 6(C) illustrates that the sliding of display item 51 has ended. When the user removes finger A in the state of Fig. 6(C), the change of the display position of display item 51 is completed. Fig. 6(D) illustrates that the change of the display position of display item 51 has been completed. In the example of Fig. 6(D), display item 53 that was displayed at the designated display position is displayed at the display position of display item 51 before the change. In other words, in the example of Fig. 6(D), the display position of display item 51 and the display position of display item 53 have been switched.

According to such a configuration, controller 140 can change the display position of the display item (display item 51) in the image display area of the first image (first image 12) based on the change instruction that is input by the user. Therefore, the convenience of the user in regard to the display position of the display item can be improved.

### [Deletion of Display Item]

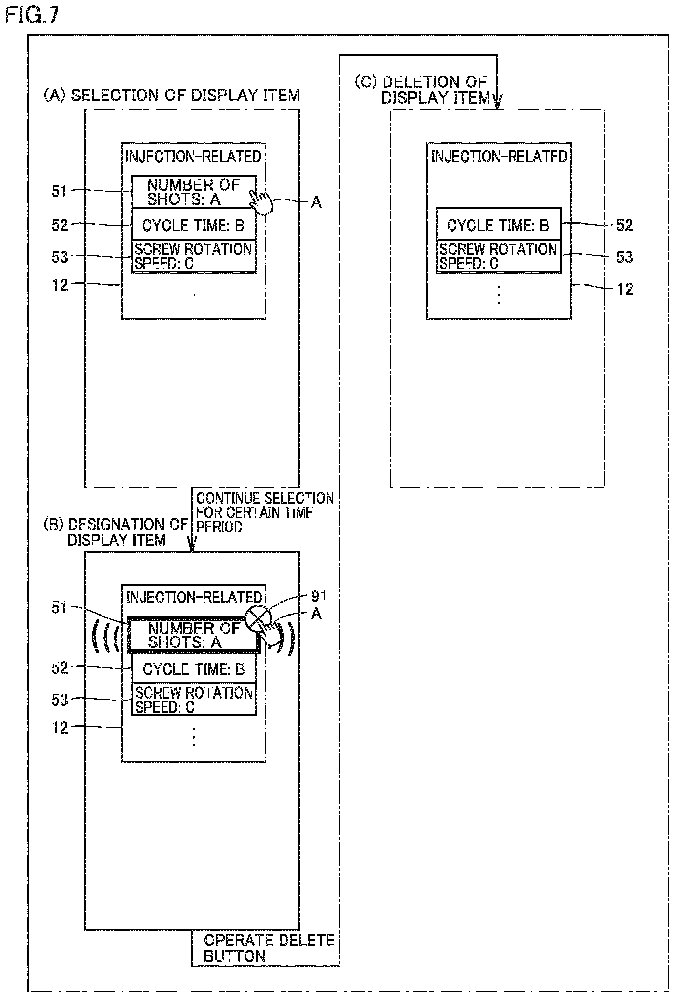

Controller 140 in the present embodiment can delete the display item displayed on display 132. Fig. 7 is a diagram showing an exemplary method of deleting the display item. Fig. 7(A) is the same diagram as Fig. 6(A). When controller 140 accepts a designation of display item 51 as shown in Fig. 7(A), delete button 91 is displayed in association with display item 51.

Fig. 7(B) illustrates that the user is operating delete button 91. Fig. 7(C) illustrates that display item 51 corresponding to operated delete button 91 has been deleted. When the user operates delete button 91 (when the user touches delete button 91) as shown in Fig. 7(B), controller 140 deletes display item 51 corresponding to delete button 91(stops displaying display item 51) as shown in Fig. 7(C). The operation of delete button 91 corresponds to the "delete instruction" in the present disclosure.

According to such a configuration, controller 140 deletes display item 51 based on the delete instruction that is input by the user. Therefore, controller 140 can delete display item 51 determined to be unnecessary by the user, thereby improving the convenience of the user.

### [Addition of Display Item]

Controller 140 in the present embodiment can import and additionally display a display item that was not displayed on display 132. When the user executes a prescribed item add instruction, controller 140 can additionally display a display item that was not displayed.

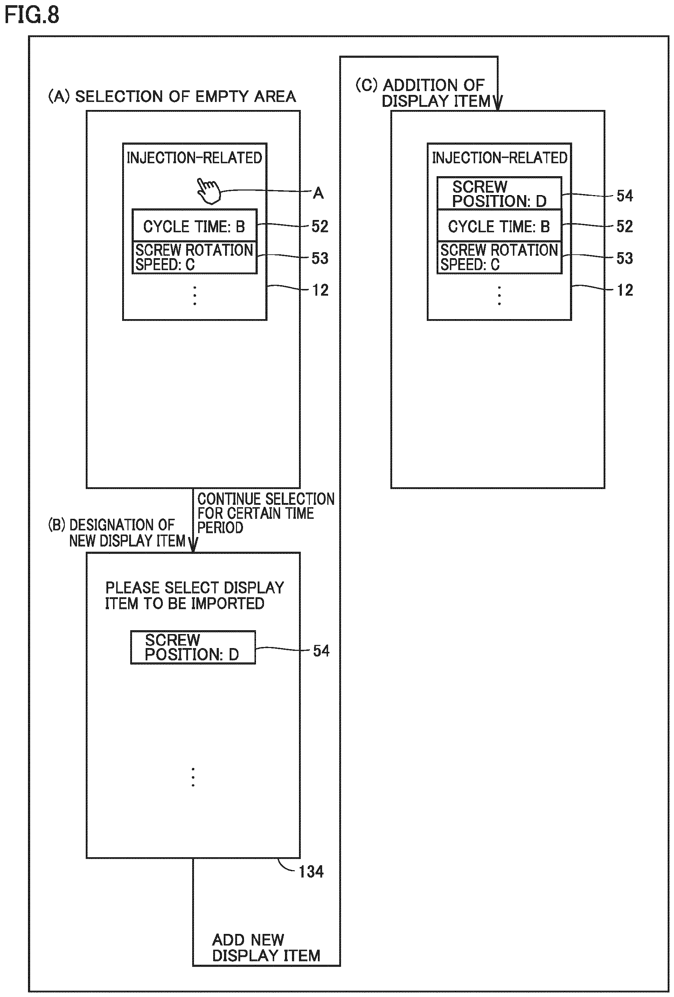

Fig. 8 is a diagram showing an exemplary method of adding a display item. Though Fig. 8 is mainly referred to in the description of the exemplary method of adding a display item below, Fig. 2 is also referred to as appropriate. Fig. 8(A) is a diagram in which the user is selecting an empty area. The empty area as used herein refers to an area not displaying any display item in the image display area displaying the display items. An instruction that designates the empty area corresponds to the "first instruction" in the present disclosure. When the selection of the empty area (the touch of the empty area with the user's finger A) is continued for a certain time period, controller 140 displays import screen 134.

Fig. 8(B) is a diagram showing exemplary import screen 134. In the example of Fig. 8(B), at least one new display item (a display item not displayed on display 132) is displayed. This import screen 134 displays a new display item of the first image including the empty area designated by the user, and does not display a new display item of a different first image. In other words, in the example of Fig. 8(B), since the user designates the empty area of inj ection-related (set values for the injection process) first image 12, import screen 134 displays at least one new display item of first image 12. On the other hand, import screen 134 does not display a new display item of a first image (for example, ejector-related first image 11) different from first image 12.

In the example of Fig. 8(B), an image indicating a position of screw 123 is displayed as a new display item 54. The user designates, from among the display items displayed on import screen 134 in Fig. 8, a display item that the user wishes to display on display 132. Import screen 134 in Fig. 8(B) corresponds to the "item list screen" in the present disclosure. An instruction that designates one of the at least one new display item displayed on import screen 134 in Fig. 8(B) corresponds to the "second instruction" in the present disclosure.

Fig. 8(C) illustrates that the new display item selected on import screen 134 has been displayed. As shown in Fig. 8(C), controller 140 displays the new display item selected on import screen 134 in Fig. 8(B) in the empty area in Fig. 8(A). The designation of the empty area (first instruction) and the designation of the new display item (second instruction) are included in the "image add instruction" in the present disclosure.

Controller 140 may automatically determine a display area in which the new display item is to be displayed on the setting screen in Fig. 2, and display the new display item in the display area. Controller 140 displays the display item deleted by the user in Fig. 4 on import screen 134 in Fig. 8.

According to such a configuration, the new display item is displayed on display 132 based on the add instruction that is input by the user. Therefore, the display item desired by the user can be displayed, so that the convenience of the user can be improved.

Controller 140 displays the new display item designated by the user in the empty area designated by the user. Therefore, the convenience of the user can be improved.

The item list screen is a screen that displays the at least one new display item of the first image including the empty area designated by the first instruction, and that does not display a new display item of a different first image. Therefore, controller 140 can prevent display of extra display items, thereby improving the convenience of the user.

The change of the display position of the first image is also referred to as a "layout change" in the description below.

[As to Possibility/Impossibility of Layout Change for Each User ID (Identification)]

Injection molding machine 100 in the present embodiment causes the user to enter a user ID, and conducts user authentication using the user ID. If the user authentication is successful, injection molding machine 100 permits the user to use injection molding machine 100.

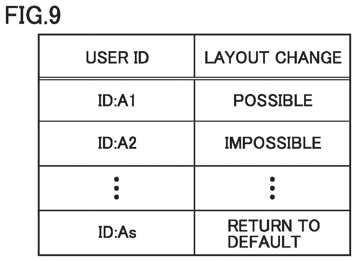

In injection molding machine 100 in the present embodiment, the possibility/impossibility of the layout change is defined for each user ID. Fig. 9 is a diagram showing an exemplary first table that associates user IDs with the possibility/impossibility of the layout change. Though Fig. 9 is mainly referred to in the description of the exemplary first table below, Figs. 1 and 2 are also referred to as appropriate. The first table in Fig. 9 is stored in memory 142 (see Fig. 1).

In the example of Fig. 9, the layout change is defined as "possible" for a user ID: A1. The layout change is defined as "impossible" for a user ID: A2. A user ID: As will be described later herein. The "user ID: A1" corresponds to the "first user ID" in the present disclosure. The "user ID: A2" corresponds to the "second user ID" in the present disclosure.

When the user logs into injection molding machine 100 by entering a user ID, controller 140 obtains the user ID. Controller 140 then determines, with reference to the first table in Fig. 9, whether the layout change is possible or impossible for the obtained user ID.

In the example of Fig. 9, when the user logs into injection molding machine 100 with user ID: A1, it is determined, with reference to the first table in Fig. 9, that the layout change is possible. When injection molding machine 100 is logged in with user ID: A1, therefore, controller 140 changes the display position of the first image based on the change instruction from the user.

In the example of Fig. 9, when the user logs into injection molding machine 100 with user ID: A2, it is determined, with reference to the first table in Fig. 9, that the layout change is impossible. When injection molding machine 100 is logged in with user ID: A2, therefore, controller 140 does not change the display position of the first image regardless of the change instruction from the user.

According to such a configuration, for example, when the user ID of a super user (such as an administrator) who has authority to change the display position of the first image is set as the first user ID, the super user can change the display position of the first image (perform the layout change). On the on the other hand, when the user ID of a normal user who does not have authority to change the display position of the first image is set as the second user ID, the user cannot change the display position of the first image (cannot perform the layout change) regardless of the change instruction. This can allow only the super user to change the display position of the first image (perform the layout change), to prevent the display position of the first image from being changed too often.

Next, user ID: As is described. When injection molding machine 100 is logged in with user ID: As, controller 140 changes the display position of the first image to the initial position (default position). User ID: As corresponds to the "specific user ID" in the present disclosure. When the user logs into injection molding machine 100 with user ID: As, controller 140 specifies, with reference to the first table in Fig. 9, that the changed display position of the first image should be returned to the default display position (see Fig. 2). Controller 140 then changes the changed display position of the first image to the initial position. According to such a configuration, controller 140 can return the changed display position of the first image to the initial position, thereby improving the convenience of the user.

### [As to Display Position of First Image for Each User ID]

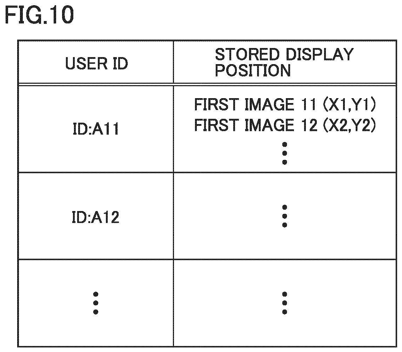

Controller 140 may store the display positions of the first images in association with a user ID. Fig. 10 is a diagram showing an exemplary second table that associates user IDs with the positions of the first images. Though Fig. 10 is mainly referred to in the description of the exemplary second table below, Figs. 1 and 2 are also referred to as appropriate. The second table in Fig. 10 is stored in memory 142 (see Fig. 1).

In the second table, the display position of each of six first images 11 to 16 is stored for each user ID. As the display position of the first image, for example, the coordinates of a specific portion of the first image (for example, a central portion of the first image) are defined.

In the example of Fig. 10, for a user ID: A11, the display position of first image 11 is stored as (X1, Y1), and the display position of first image 12 is stored as (X2, Y2). Though not specifically indicated in the example of Fig. 10, the display position of each of first images 13 to 16 is also stored for user ID: A11.

In the example of Fig. 10, the display position of each of six first images 11 to 16 is also stored for other user IDs (for example, A12).

When the user logs into injection molding machine 100 by entering a user ID, controller 140 obtains the user ID. Controller 140 then obtains, with reference to the second table in Fig. 10, the display position of each of first images 11 to 16 corresponding to the obtained user ID. Controller 140 then displays each of first images 11 to 16 at the display position of each of first images 11 to 16 obtained by controller 140.

According to such a configuration, controller 140 can display the first images at the display positions corresponding to the user ID that was used to log into the injection molding machine. When logged in, therefore, controller 140 can instantly display the first images at the display positions set by the logged in user.

### <Second Embodiment>

A second embodiment describes an example in which the additional display of a first image (see Fig. 5) is applied to another embodiment. Figs. 1, 2 and 5 are referred to as appropriate in the description of the second embodiment. In the second embodiment, screw 123 (see Fig. 1) and moving plate 114 (see Fig. 1) correspond to the "partial mechanism of injection molding machine 100" in the present disclosure. In addition, "servo motor 153" for driving screw 123 corresponds to the "first drive apparatus" in the present disclosure, and "servo motor 151" for driving moving plate 114 corresponds to the "second drive apparatus" in the present disclosure. The present embodiment describes a configuration in which the mechanism (screw 123) driven by the first drive apparatus and the mechanism (servo motor 151) driven by the second drive apparatus are different from each other. In a modification, however, the mechanism driven by the first drive apparatus and the mechanism driven by the second drive apparatus may be the same. In the description below, the mechanism driven by the first drive apparatus is also referred to as a "first drive mechanism," and the mechanism driven by the second drive apparatus is also referred to as a "second drive mechanism."

Display 132 in the present embodiment displays an image related to a set value of the first drive mechanism (screw 123) (hereinafter also referred to as a "first drive image") and an image related to a set value of the second drive mechanism (moving plate 114) (hereinafter also referred to as a "second drive image") on different display screens. However, if the user wishes to view both the first drive image and the second drive image when these drive images are being displayed on different display screens, the user needs to perform an operation such as switching the display screens, which increases the burden on the user.

In the present embodiment, therefore, a first image displayed on the default design screen (see Fig. 2) includes an image related to the mechanism (screw 123) driven by the first drive apparatus (servo motor 153). A first image that can be additionally displayed on the default design screen (the new first image displayed on import screen 134 in Fig. 5) includes an image related to the mechanism (moving plate 114) driven by the second drive apparatus (servo motor 151).

According to such a configuration, controller 140 can display, based on the add instruction from the user, an image related to the mechanism driven by the second drive apparatus as a new first image together with the first image on the same display screen. Therefore, the burden on the user, based on the first drive image and the second drive image being displayed on different display screens, can be reduced.

### <Third Embodiment>

In the configuration described in the example of Fig. 4 in the first embodiment, when controller 140 accepts a designation of first image 11, delete button 91 for deleting designated first image 11 is displayed. However, the image for deleting designated first image 11 may be another image.

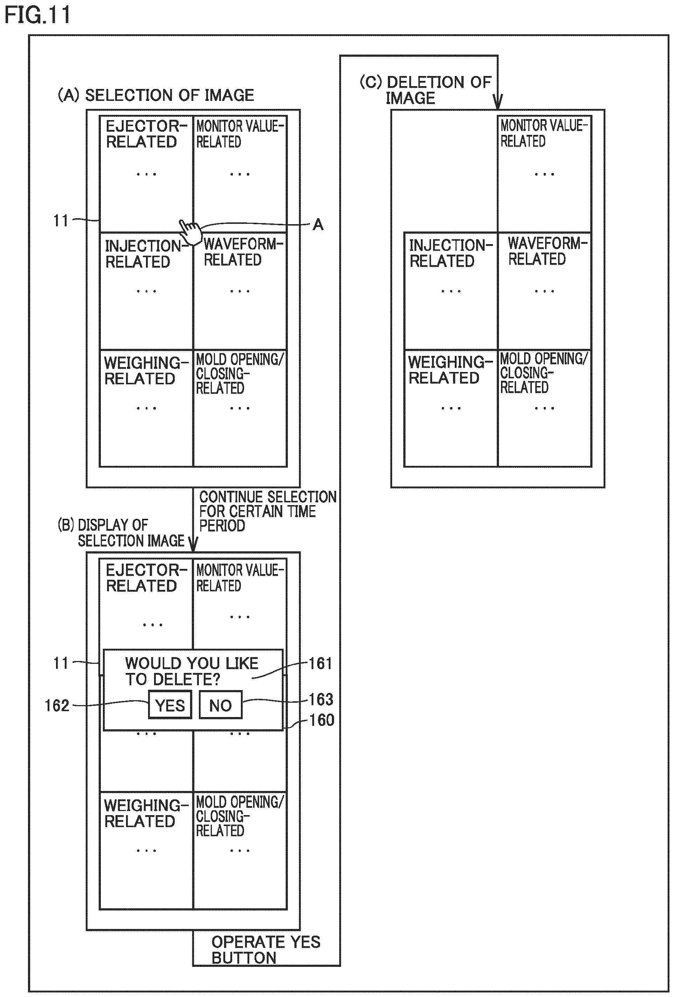

Fig. 11 is a diagram for illustrating another image for deleting designated first image 11. Fig. 11(A) is the same diagram as Fig. 4(A). When controller 140 accepts a designation of first image 11 as shown in Fig. 1 1(A), a selection image is displayed.

Fig. 11(B) is a diagram showing an exemplary selection image 160. Controller 140 displays selection image 160 as a pop-up image. Selection image 160 includes a text image 161 that reads "WOULD YOU LIKE TO DELETE?," a YES button 162, and a NO button 163. When YES button 162 is selected by the user, controller 140 deletes the first image designated in Fig. 11(A). When NO button 163 is selected by the user, controller 140 displays the screen of Fig. 11(A). With such a configuration as shown in Fig. 11, too, the user can delete first image 11 determined to be unnecessary by the user.

In the configuration described in the example of Fig. 7, when controller 140 accepts a designation of display item 51, delete button 91 for deleting designated display item 51 is displayed. However, the image for deleting designated display item 51 may be another image.

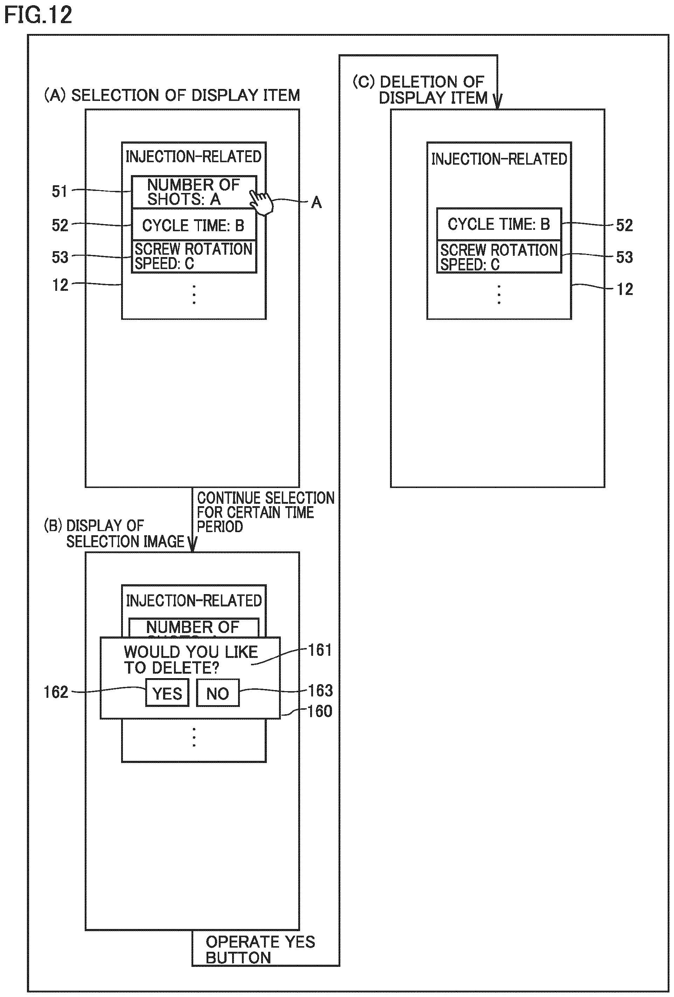

Fig. 12 is a diagram for illustrating another image for deleting designated display item 51. Fig. 12(A) is the same diagram as Fig. 7(A). When controller 140 accepts a designation of display item 51 as shown in Fig. 12(A), a selection image is displayed.

Fig. 12(B) is a diagram showing exemplary selection image 160. This selection image 160 is the same as selection image 160 in Fig. 11(B). When YES button 162 is selected by the user, controller 140 deletes the display item designated in Fig. 12(A). When NO button 163 is selected by the user, controller 140 displays the screen of Fig. 12(A). With such a configuration as shown in Fig. 12, too, the user can delete display item 51 determined to be unnecessary by the user.

### [Additional Aspects]

It will be understood by those skilled in the art that the plurality of exemplary embodiments described above are specific examples of aspects below.

(Clause 1) An injection molding machine of the present disclosure includes a display and a controller. The controller displays a first image related to the injection molding machine on the display. The controller is configured to change a display position of the first image based on a change instruction that is input by a user.

(Clause 2) In the injection molding machine according to Clause 1, the controller is configured to display a display item of the first image in an image display area displaying the first image. The controller is configured to change a display position of the display item in the image display area based on the change instruction.

(Clause 3) In the injection molding machine according to Clause 2, the controller is configured to display a new display item of the first image in the image display area based on an item add instruction that is input by the user.

(Clause 4) In the injection molding machine according to Clause 3, the item add instruction includes a first instruction and a second instruction. The first instruction is an instruction that designates an empty area not displaying the display item in the image display area displaying the first image. The controller is configured to display, in response to input of the first instruction, an item list screen that displays at least one new display item of the first image including the empty area designated by the first instruction. The second instruction is an instruction that designates one of the at least one new display item displayed on the item list screen. The controller is configured to display the new display item designated by the second instruction in the empty area designated by the first instruction.

(Clause 5) In the injection molding machine according to Clause 4, the item list screen is a screen that displays at least one new display item of the first image including the empty area designated by the first instruction, and that does not display a new display item of a different first image.

(Clause 6) In the injection molding machine according to any one of Clauses 2 to 5, the controller is configured to delete the display item based on a delete instruction that is input by the user.

(Clause 7) In the injection molding machine according to any one of Clauses 1 to 6, the controller is configured to display, in a specific position on the display, a second image that is different from the first image and that is related to the injection molding machine. The controller is configured not to change a display position of the second image from the specific position regardless of input of the change instruction.

(Clause 8) In the injection molding machine according to Clause 7, the injection molding machine produces a molded article by performing a plurality of processes. The second image is an image indicating a process of the plurality of processes that is being performed by the injection molding machine.

(Clause 9) In the injection molding machine according to any one of Clauses 1 to 8, the controller is configured to display a new first image on the display based on an image add instruction that is input by the user.

(Clause 10) In the injection molding machine according to Clause 9, the image add instruction includes a third instruction and a fourth instruction. The third instruction is an instruction that designates an empty area not displaying the first image in a screen displaying the first image. The controller is configured to display, in response to input of the third instruction, an image list screen that displays at least one new first image. The fourth instruction is an instruction that designates one of the at least one new first image displayed on the image list screen. The controller is configured to display the new first image designated by the fourth instruction in the empty area designated by the third instruction.

(Clause 11) The injection molding machine according to Clause 9 or 10 includes: a first drive apparatus that drives a partial mechanism of the injection molding machine; and a second drive apparatus that drives a partial mechanism of the injection molding machine. The first image is an image related to the mechanism driven by the first drive apparatus. The new first image is an image related to the mechanism driven by the second drive apparatus.

(Clause 12) In the injection molding machine according to any one of Clauses 1 to 11, the controller is configured to delete the first image based on a delete instruction that is input by the user.

(Clause 13) The injection molding machine according to any one of Clauses 1 to 12 further includes a memory that stores the display position of the first image in association with each of user IDs (identifications). When the injection molding machine is logged in with a user ID, the controller is configured to display the first image at a display position of the first image corresponding to the user ID.

(Clause 14) In the injection molding machine according to any one of Clauses 1 to 13, when the injection molding machine is logged in with a first user ID, the controller is configured to change the display position of the first image based on the change instruction. When the injection molding machine is logged in with a second user ID, the controller is configured not to change the display position of the first image regardless of the change instruction.

(Clause 15) In the injection molding machine according to any one of Clauses 1 to 14, when the injection molding machine is logged in with a specific user ID, the controller is configured to change the display position of the first image to an initial position.

(Clause 16) In the injection molding machine according to any one of Clauses 1 to 15, the controller is configured to change the display position of the first image to an initial position based on a return instruction that is input by the user.

(Clause 17) In the injection molding machine according to any one of Clauses 1 to 16, the controller is configured to display, in response to input of a designation of the first image and a designation of a display position of the first image by the user in a display area of the display, the designated first image at the designated display position.

(Clause 18) In the injection molding machine according to Clause 17, the controller is configured to accept the designation of the first image in response to continuation of selection of the first image by the user for a certain time period.

(Clause 19) In the injection molding machine according to Clause 17 or 18, when the controller accepts the designation of the first image, the controller is configured to display the first image in a specific display mode different from a display mode when the first image is not designated.

(Clause 20) In the injection molding machine according to Clause 19, the controller is configured to display the first image in a vibrating mode as the specific display mode.

Although the embodiments of the present invention have been described, it should be understood that the embodiments disclosed herein are illustrative and non-restrictive in every respect. The scope of the present invention is defined by the terms of the claims, and is intended to include any modifications within the scope and meaning equivalent to the terms of the claims.

## Claims

1. An injection molding machine (100) comprising:
a display (132); and
a controller (140) that displays a first image (11) related to the injection molding machine (100) on the display (132), wherein
the controller (140) is configured to change a display position of the first image (11) based on a change instruction that is input by a user.

2. The injection molding machine (100) according to claim 1, wherein
the controller (140) is configured to display a display item of the first image (11) in an image display area displaying the first image (11), and
the controller (140) is configured to change a display position of the display item in the image display area based on the change instruction.

3. The injection molding machine (100) according to claim 2, wherein
the controller (140) is configured to display a new display item of the first image (11) in the image display area based on an item add instruction that is input by the user.

4. The injection molding machine (100) according to claim 3, wherein
the item add instruction includes
a first instruction that designates an empty area not displaying the display item in the image display area displaying the first image (11), and
a second instruction,
the controller (140) is configured to display, in response to input of the first instruction, an item list screen (134) that displays at least one new display item of the first image (11) including the empty area designated by the first instruction,
the second instruction is an instruction that designates one of the at least one new display item displayed on the item list screen (134), and
the controller (140) is configured to display the new display item designated by the second instruction in the empty area designated by the first instruction.

5. The injection molding machine (100) according to claim 4, wherein
the item list screen (134) is a screen that displays at least one new display item of the first image (11) including the empty area designated by the first instruction, and that does not display a new display item of a different first image (11).

6. The injection molding machine (100) according to any one of claims 2 to 5, wherein
the controller (140) is configured to delete the display item based on a delete instruction that is input by the user.

7. The injection molding machine (100) according to any one of claims 1 to 6, wherein
the controller (140)
is configured to display, in a specific position on the display (132), a second image (21) that is different from the first image (11) and that is related to the injection molding machine (100), and
is configured not to change a display position of the second image (21) from the specific position regardless of input of the change instruction.

8. The injection molding machine (100) according to claim 7, wherein
the injection molding machine (100) produces a molded article by performing a plurality of processes, and
the second image (21) is an image indicating a process of the plurality of processes that is being performed by the injection molding machine (100).

9. The injection molding machine (100) according to any one of claims 1 to 8, wherein
the controller (140) is configured to display a new first image (11) on the display (132) based on an image add instruction that is input by the user.

10. The injection molding machine (100) according to claim 9, wherein
the image add instruction includes
a third instruction that designates an empty area not displaying the first image (11) in a screen displaying the first image (11), and
a fourth instruction,
the controller (140) is configured to display, in response to input of the third instruction, an image list screen that displays at least one new first image (11),
the fourth instruction is an instruction that designates one of the at least one new first image (11) displayed on the image list screen, and
the controller (140) is configured to display the new first image (11) designated by the fourth instruction in the empty area designated by the third instruction.

11. The injection molding machine (100) according to claim 9 or 10, comprising:
a first drive apparatus (153) that drives a partial mechanism of the injection molding machine (100); and
a second drive apparatus (151) that drives a partial mechanism of the injection molding machine (100), wherein
the first image (11) is an image related to the mechanism driven by the first drive apparatus (153), and
the new first image (11) is an image related to the mechanism driven by the second drive apparatus (151).

12. The injection molding machine (100) according to any one of claims 1 to 11, wherein
the controller (140) is configured to delete the first image (11) based on a delete instruction that is input by the user.

13. The injection molding machine (100) according to any one of claims 1 to 12, further comprising a memory (142) that stores the display position of the first image (11) in association with each of user IDs (identifications), wherein
when the injection molding machine (100) is logged in with a user ID, the controller (140) is configured to display the first image (11) at a display position of the first image (11) corresponding to the user ID.

14. The injection molding machine (100) according to any one of claims 1 to 13, wherein
when the injection molding machine (100) is logged in with a first user ID, the controller (140) is configured to change the display position of the first image (11) based on the change instruction, and
when the injection molding machine (100) is logged in with a second user ID, the controller (140) is configured not to change the display position of the first image (11) regardless of the change instruction.

15. The injection molding machine (100) according to any one of claims 1 to 14, wherein
when the injection molding machine (100) is logged in with a specific user ID, the controller (140) is configured to change the display position of the first image (11) to an initial position.

16. The injection molding machine (100) according to any one of claims 1 to 15, wherein
the controller (140) is configured to change the display position of the first image (11) to an initial position based on a return instruction that is input by the user.

17. The injection molding machine (100) according to any one of claims 1 to 16, wherein
the controller (140) is configured to display, in response to input of a designation of the first image (11) and a designation of a display position of the first image (11) by the user in a display area of the display (132), the designated first image (11) at the designated display position.

18. The injection molding machine (100) according to claim 17, wherein
the controller (140) is configured to accept the designation of the first image (11) in response to continuation of selection of the first image (11) by the user for a certain time period.

19. The injection molding machine (100) according to claim 17 or 18, wherein
when the controller (140) accepts the designation of the first image (11), the controller (140) is configured to display the first image (11) in a specific display mode different from a display mode when the first image (11) is not designated.

20. The injection molding machine (100) according to claim 19, wherein
the controller (140) is configured to display the first image (11) in a vibrating mode as the specific display mode.
